# EUROPEAN PATENT SPECIFICATION

(11) **EP 3 062 449 B1**
(45) Date of publication and mention of the grant of the patent: **24.10.2018**
(21) Application number: 15156326.9
(22) Date of filing: 24.02.2015
(51) Int. Cl.: H04B 7/06, H04B 7/08

(54) **APPARATUS, METHOD AND COMPUTER PROGRAM FOR A TRANSCEIVER OF A MOBILE COMMUNICATION SYSTEM, MOBILE RELAY STATION TRANSCEIVER**
VORRICHTUNG, VERFAHREN UND COMPUTERPROGRAMM FÜR EINEN SENDER-EMPFÄNGER EINES MOBILKOMMUNIKATIONSSYSTEMS, SENDER-EMPFÄNGER EINER MOBILEN RELAISSTATION
APPAREIL, PROCÉDÉ ET PROGRAMME INFORMATIQUE POUR UN ÉMETTEUR-RÉCEPTEUR D'UN SYSTÈME DE COMMUNICATION MOBILE, STATION DE RELAIS MOBILE ÉMETTEUR-RÉCEPTEUR

(43) Date of publication of application: 31.08.2016
(73) Proprietor: Nash Innovations GmbH, 90411 Nürnberg (DE)
(72) Inventor: Reichenbach, Jörg Arnt, 90542 Eckental (DE); Dr. Keuker, Claus, 82327 Tutzing (DE)
(74) Representative: 2SPL Patentanwälte PartG mbB

(56) References cited:
- WO-A1-2011/084717
- WO-A2-2010/105210
- US-A1- 2014 140 224
- US-B1- 8 885 756

## Description

### Technical Field

Embodiments relate to an apparatus, a method and a computer program for a transceiver of a mobile communication system and a mobile relay station transceiver, and more particularly, but not exclusively, to improving the performance of a mobile relay station transceiver by dynamically selecting from a plurality of antennas.

### Background

Demands for higher data rates for mobile services are steadily increasing. At the same time modern mobile communication systems as 3rd Generation systems (3G) and 4th Generation systems (4G) provide enhanced technologies, which enable higher spectral efficiencies and allow for higher data rates and cell capacities. Users of today's handhelds become more difficult to satisfy. While old feature phones generated only data or voice traffic, current smartphones, tablets, and netbooks run various applications in parallel that can fundamentally differ from each other. Compared to conventional phones, this application mix leads to a number of new characteristics. For example, highly dynamic load statistics result, where the average load is increasing. Moreover, the number of networks for voice and data access is also increasing, therewith roaming options between these networks become available when multiple network layers overlap or at network boundaries, respectively.

Use of multi antenna concepts for wireless devices is known in the art, for example, multiple receive antennas are used to take advantage of receive diversity, which may improve signal quality and system capacity. Other known concepts include Multiple-Input-Multiple-Output (MIMO) transmission, COoperative MultiPoint (COMP) transmission, macro diversity, etc. Wireless devices are typically equipped with one or two antennas as these are supported by the chipsets allowing cost effective development and production of such devices.

Document US 2014/0140224 A1 discloses a concept simultaneously operating a wide area transceiver and an auxiliary receiver simultaneously on a plurality of antennas. The concept seeks to reduce desensitization of the auxiliary receiver evoked by transmissions of the wide area transceiver. An antenna selection circuit selects antenna configurations for the transceiver and the receiver, such that a signal quality for the auxiliary receiver can be maintained. Document WO 2011/084717 A1 describes techniques for operating a plurality of radios with a limited number of antennas. Antennas are selected based on performance metrics. Document US 8 885 756 B1 discloses a predictive antenna pairing concept for a vehicle with multiple fixed antennae approaching a port. Document WO 2010/105210 A2 describes a utilization of multiple multi-antenna signal processing concepts in a vehicle to improve cell edge performance in a mobile communication system.

### Summary

Some simplifications may be made in the following summary, which is intended to highlight and introduce some aspects of the various exemplary embodiments, but such simplifications are not intended to limit the scope of the invention(s). Detailed descriptions of a preferred exemplary embodiment adequate to allow those of ordinary skill in the art to make and use the inventive concepts will follow in later sections.

Various embodiments provide an apparatus, a method and a computer program for a transceiver of a mobile communication system and a mobile relay station transceiver. Embodiments are based on the finding that although a transceiver of a mobile communication system may have only a limited set of antenna ports, such ports may be dynamically coupled to different antennas depending on performance criteria. If antennas for coupling to the antenna ports or interfaces can be dynamically selected from a larger set of antennas, antennas of difference orientations, polarizations, beam patterns, etc. can be used. In some embodiments improved transmission characteristics may be achieved by selecting antennas from a plurality of antennas offering higher variety of characteristics compared to a limited set of permanently connected antennas.

Embodiments provide an apparatus for a transceiver of a mobile communication system. The apparatus comprises one or more interfaces to a plurality of antennas and a transceiver module to communicate (transmit and/or receive) in the mobile communication system using a subset of the plurality of antennas. The apparatus further comprises a coupling module to couple the subset of the plurality of antennas to the transceiver module using the one or more interfaces. Furthermore, the apparatus comprises a control module to control the transceiver module and the coupling module, and to select antennas for the subset of antennas from the plurality of antennas based on predetermined information related to an antenna performance. Embodiments may allow an improved transmission performance by selecting a subset of antennas from a plurality of antennas based on the performance of the antennas.

In some embodiments the control module may be configured to dynamically select or change the antennas in the subset while communicating in the mobile communication system. Embodiments may even further improve the transmission performance by dynamically selecting the subset of antennas in changing radio conditions. The apparatus may, in some further embodiments, comprise a receiver module, which is controlled by the control module. The receiver module may be configured to receive and measure signals of at least one antenna from the plurality of antennas, which is deselected for the subset or which is not part of the subset. The information related to the antenna performance may correspond to information related to signal quality measurements on at least some antennas of the plurality of antennas. By measuring antennas from the plurality of antennas, e.g. antennas which are selected for transmission or reception and antennas which are not selected, advantageous or even optimal antennas may be selected for the subset. The receiver module may be further configured to receive signals from the mobile communication system and the information related to the antennas performance may correspond to a receive level of the signals of the mobile communication system at an antenna. Embodiments may enable receive level evaluation of multiple antennas. In some embodiments the receiver module may be configured to receive and decode signals from the mobile communication system. The information related to the antenna performance may correspond to a quality level after decoding of the signals of the mobile communication system at an antenna. Some embodiments may provide the advantage that the signal quality after decoding can be evaluated, e.g. in terms of a bit-error rate, block-error rate, etc. Such embodiment may enable a better evaluation on which antennas may provide an actual reception quality increase.

In some embodiments the apparatus may further comprise a storage module, which is controlled by the control module. The storage module may be configured to store information related to the subset together with information related to a location of the apparatus, where the information related to the location may be determined locally or obtained from another device, e.g. a navigation unit, through an accordingly configured communication interface, which will be detailed subsequently. Embodiments may provide the possibility to store at what location which antennas provided good or even best performance (which antennas provided bad or even worst performance, respectively) such that the data can be made available at a later point time and potentially even to other transceivers. Furthermore, a positioning module may be comprised in the apparatus in some embodiments, which is controlled by the control module. The positioning module may be configured to obtain the information related to the location of the apparatus for storage. Embodiments may enable utilization of a positioning module, be it internal or external to the transceiver or apparatus, for determining the information related to the location. The control module may be configured to select the antennas for the subset based on actual information related to the location of the apparatus and information related to the subset stored by the storage module in relation to the location. Embodiments may enable utilization of a trace of beneficial antenna selections for the subset.

The storage module may be configured to store a look-up table assigning information related to a location of the apparatus to subsets of antennas for selection in some embodiments. An antenna selection for the subset may then be efficiently determined based on the look-up table. The apparatus may further comprise a communication interface to communicate with another transceiver of the mobile communication system. For example, the two transceivers may be located on the same vehicle, or they may travel along similar or even identical paths. The communication interface may be controlled by the control module. The control module may be configured to obtain and/or provide the information related to the antenna performance from/to the other transceiver using the communication interface. Embodiments may make data on beneficial antenna selections for the subset available to other transceivers; receive such data from other transceivers, respectively. The coupling module may correspond to an antenna switch or an antenna switch matrix for switching at least two antenna ports of the transceiver module to at least four antennas via at least four interfaces. Embodiments may make use of an efficient antenna switch being controlled by the control module. Embodiments further provide a mobile relay station transceiver comprising an above described apparatus. The mobile relay station transceiver may be implemented in a vehicle, which comprises the plurality of antennas. The plurality of antennas may comprise antennas of different orientations and characteristics.

Embodiments further provide a method for a transceiver of a mobile communication system. The method comprises communicating in the mobile communication system using a subset of a plurality of antennas and coupling the subset of the plurality of antennas to a transceiver module. The method further comprises selecting antennas for the subset of antennas from the plurality of antennas based on predetermined information related to an antenna performance.

Embodiments further provide a computer program having a program code for performing one or more of the above described methods, when the computer program is executed on a computer, processor, or programmable hardware. A further embodiment is a computer readable storage medium storing instructions which, when executed by a computer, processor, or programmable hardware, cause the computer to implement one of the methods described herein.

### Brief description of the figures

Some other features or aspects will be described using the following non-limiting embodiments of apparatuses and/or methods and/or computer programs and/or computer program products by way of example only, and with reference to the accompanying figures, in which
Fig. 1 illustrates a block diagram of an embodiment of an apparatus for a transceiver;
Fig. 2 shows another embodiment of an apparatus for a transceiver;
Fig. 3 shows an embodiment of a mobile relay station transceiver;
Fig. 4 shows multiple embodiments of mobile relay station transceivers in a train; and
Fig. 5 shows a block diagram of a flow chart of an embodiment of a method for a transceiver.

### Description of Embodiments

Various example embodiments will now be described more fully with reference to the accompanying drawings in which some example embodiments are illustrated. In the figures, the thicknesses of lines, layers and/or regions may be exaggerated for clarity.

Accordingly, while example embodiments are capable of various modifications and alternative forms, embodiments thereof are shown by way of example in the figures and will herein be described in detail. It should be understood, however, that there is no intent to limit example embodiments to the particular forms disclosed, but on the contrary, example embodiments are to cover all modifications, equivalents, and alternatives falling within the scope of the invention. Like numbers refer to like or similar elements throughout the description of the figures.

It will be understood that when an element is referred to as being "connected" or "coupled" to another element, it can be directly connected or coupled to the other element or intervening elements may be present. In contrast, when an element is referred to as being "directly connected" or "directly coupled" to another element, there are no intervening elements present. Other words used to describe the relationship between elements should be interpreted in a like fashion (*e.g.,* "between" versus "directly between," "adjacent" versus "directly adjacent," etc.).

The terminology used herein is for the purpose of describing particular embodiments only and is not intended to be limiting of example embodiments. As used herein, the singular forms "a," "an" and "the" are intended to include the plural forms as well, unless the context clearly indicates otherwise. It will be further understood that the terms "comprises," "comprising," "includes" and/or "including," when used herein, specify the presence of stated features, integers, steps, operations, elements and/or components, but do not preclude the presence or addition of one or more other features, integers, steps, operations, elements, components and/or groups thereof.

Unless otherwise defined, all terms (including technical and scientific terms) used herein have the same meaning as commonly understood by one of ordinary skill in the art to which example embodiments belong. It will be further understood that terms, e.g., those defined in commonly used dictionaries, should be interpreted as having a meaning that is consistent with their meaning in the context of the relevant art and will not be interpreted in an idealized or overly formal sense unless expressly so defined herein.

Embodiments may allow utilizing a larger number of antennas in a wireless communication system and to improve the signal quality, enhance system capacity, respectively. Embodiments may provide a mechanism how to benefit from several such systems being connected, for example in vehicles, such as trains, subways, planes, ships, cars, trucks, etc. Embodiments are based on the finding that wireless communication systems, e.g. user equipment for mobile networks, may have larger dimensions allowing to fit multiple antennas or more antennas than conventional handheld devices may fit. Conventional wireless devices used in vehicular equipment are typically equipped with one or two antennas as these are supported by current chipsets allowing cost effective development and production of such devices. However, wireless devices fitted to, for example, objects or vehicles may benefit from a larger number of antennas placed at different positions of the object or vehicle. Existing diversity methods to combine different antenna signals based on signal strength might not be optimal for complex digital communication systems as used in current mobile networks.

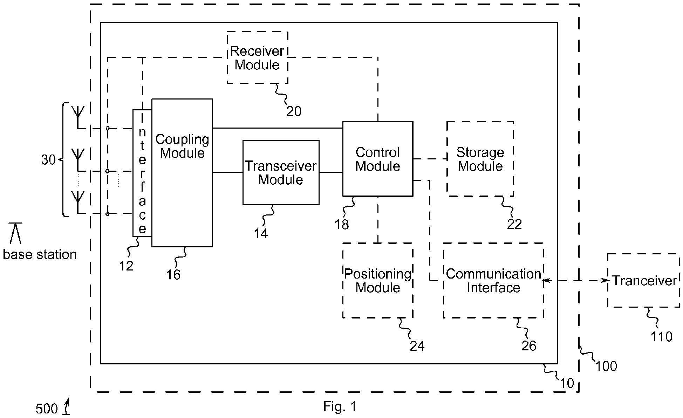

Fig. 1 illustrates a block diagram of an embodiment of an apparatus 10 for transceiver 100. In the Figs. optional components are shown in broken lines. Embodiments provide the apparatus 10 as shown in Fig. 1 and embodiments may provide a transceiver 100 comprising the apparatus 10. The apparatus 10 is suitable for a transceiver 100 of a mobile communication system 500. The apparatus 10 comprises one or more interfaces 12 to a plurality of antennas 30 and a transceiver module 14 to communicate in the mobile communication system 500 using a subset of the plurality of antennas 30. As shown in Fig. 1 the one or more interfaces 12 can be coupled to the plurality of antennas 30. The apparatus 10 further comprises a coupling module 16 to couple the subset of the plurality of antennas 30 to the transceiver module 14 using the one or more interfaces 12. The coupling module 16 may comprise or be coupled to the one or more interfaces 12. The apparatus 10 further comprises a control module 18 to control the transceiver module 14 and the coupling module 16. The control module 18 is coupled to the transceiver module 14 and the coupling module 16. The control module 18 is further configured to select antennas for the subset of antennas from the plurality of antennas 30 based on predetermined information related to an antenna performance. Fig. 1 further illustrates a base station being part of the mobile communication system 500.

In embodiments the mobile communication system 500 may, for example, correspond to one of the mobile communication systems standardized by the 3^{rd} Generation Partnership Project (3GPP), e.g. Global System for Mobile Communications (GSM), Enhanced Data rates for GSM Evolution (EDGE), GSM EDGE Radio Access Network (GERAN), High Speed Packet Access (HSPA), Universal Terrestrial Radio Access Network (UTRAN) or Evolved UTRAN (E-UTRAN), Long Term Evolution (LTE) or LTE-Advanced (LTE-A), or mobile communication systems with different standards, e.g. Worldwide Interoperability for Microwave Access (WIMAX) IEEE 802.16 or Wireless Local Area Network (WLAN) IEEE 802.11, generally any system based on Time Division Multiple Access (TDMA), Frequency Division Multiple Access (FDMA), Orthogonal Frequency Division Multiple Access (OFDMA), Code Division Multiple Access (CDMA), etc. In the following the terms mobile communication system and mobile communication network are used synonymously.

The mobile communication system may comprise a plurality of transmission points or base station transceivers operable to communicate radio signals with a mobile or relay transceiver. In embodiments, the mobile communication system may comprise mobile transceivers, relay station transceivers and base station transceivers. The relay station transceivers and base station transceivers can be composed of one or more central units and one or more remote units.

A mobile transceiver may correspond to a smartphone, a cell phone, User Equipment (UE), a laptop, a notebook, a personal computer, a Personal Digital Assistant (PDA), a Universal Serial Bus (USB) -stick, a tablet computer, a car, etc. A mobile transceiver or terminal may also be referred to as UE or user in line with the 3GPP terminology. A base station transceiver can be located in the fixed or stationary part of the network or system. A base station transceiver may correspond to a remote radio head, a transmission point, an access point, a macro cell, a small cell, a micro cell, a pico cell, a femto cell, a metro cell etc. The term small cell may refer to any cell smaller than a macro cell, i.e. a micro cell, a pico cell, a femto cell, or a metro cell. Moreover, a femto cell is considered smaller than a pico cell, which is considered smaller than a micro cell. A base station transceiver can be a wireless interface of a wired network, which enables transmission and reception of radio signals to a UE, mobile transceiver or relay transceiver. Such a radio signal may comply with radio signals as, for example, standardized by 3GPP or, generally, in line with one or more of the above listed systems. Thus, a base station transceiver may correspond to a NodeB, an eNodeB, a BTS, an access point, etc. A relay station transceiver may correspond to an intermediate network node in the communication path between a base station transceiver and a mobile station transceiver. A relay station transceiver may forward a signal received from a mobile transceiver to a base station transceiver, signals received from the base station transceiver to the mobile station transceiver, respectively.

The mobile communication system may be cellular. The term cell refers to a coverage area of radio services provided by a transmission point, a remote unit, a remote head, a remote radio head, a base station transceiver, relay transceiver or a NodeB, an eNodeB, respectively. The terms cell and base station transceiver may be used synonymously. In some embodiments a cell may correspond to a sector. For example, sectors can be achieved using sector antennas, which provide a characteristic for covering an angular section around a base station transceiver or remote unit. In some embodiments, a base station transceiver or remote unit may, for example, operate three or six cells covering sectors of 120° (in case of three cells), 60° (in case of six cells) respectively. Likewise a relay transceiver may establish one or more cells in its coverage area. A mobile transceiver can be registered or associated with at least one cell, i.e. it can be associated to a cell such that data can be exchanged between the network and the mobile in the coverage area of the associated cell using a dedicated channel, link or connection. A mobile transceiver may hence register or be associated with a relay station or base station transceiver directly or indirectly, where an indirect registration or association may be through one or more relay transceivers.

Embodiments of a mobile relay apparatus may improve the cellular coverage in a vehicle. A relay node may be used in order to connect multiple terminals inside of the vehicle and provide an aggregated connection to a stationary cellular communication system via a wireless backhaul link to a stationary cellular communications network, for example, over one or more external vehicle antennas. In the following the link between a stationary base station and an external antenna of a vehicle relay node may be denoted as relay or backhaul link; the link between a relay node and end user terminals will be denoted as access link.

Such a relay node may, for example, correspond to a relay as defined in 3^{rd} Generation Partnership Project (3GPP) Release 10, a moving relay as currently discussed in 3GPP Release 12 study groups and in current research literature, a wireless repeater (analog or digital), or a femto cell with a wireless backhaul connection. In case of a femto cell, the wireless backhaul connection could be provided over a separate cellular communication terminal, e.g., a 2G/3G/4G modem. It is another finding that for the relay link and for the access link, respectively, the same or different frequency and spectrum resources can be used.

Note that in the following description of embodiments the term "femto cell" will be used as a synonym for the term "Home eNB" as used in 3GPP standards, for small cells, such as micro, pico, femto cells, etc., as well as relay nodes defined according to 3GPP Release 10 & following releases.

In embodiment an antenna or antenna element as comprised in the plurality of antennas 30 may correspond to any kind of antennas, such as, for example, dipole antennas, patch antennas, directive antennas, etc. Moreover, the antennas or antenna elements may have different orientation, polarizations, main lobe directions etc. An antenna may even be comprised of multiple antenna elements, for example, to form an overall desired antenna characteristic, e.g. a desired antenna pattern with main beam directions and/or certain direction with no or reduced antenna gain. Fig. 1 symbolizes the plurality of antennas 30 by three antenna symbols, where it is to be understood that the plurality of antennas potentially comprise more antennas.

In embodiments the one or more interfaces 12 may correspond to any interfaces adapted to the respective communication or access technology, which may be wireless or wire line communication. An interface may use a certain access technology, protocol, medium, etc. to establish a connection between the coupling module 16 and a subset of the plurality of antennas 30. As an example, in an embodiment the one or more interfaces 12 may correspond to one or more radio frequency connectors, couplers, or plugs, allowing a communication, connection, or signal transfer between the signals provided by the transceiver module 14 through the coupling module 16 and the subset of antennas.

The coupling module 16 may correspond to one or more coupling units, one or more coupling devices, any means for coupling, etc. In embodiments a coupling module 16 may comprise switching components, such as mechanical switches, electronic switches, e.g. transistors, etc. The coupling module 16 may hence correspond to one or more antenna switches, an antenna switch matrix, a multiplexer, a de-multiplexer, a duplexer, a diplexer, etc.

The transceiver module 14, which may comprise transmitter and receiver elements or components, may correspond to one or more transceiver units, one or more transceiver devices, any means for transceiving, etc. In embodiments a transceiver module 14 may comprise typical transmitter and/or receiver components. Such components may comprise one or more transmit and/or receive antenna connectors, a Low Noise Amplifier (LNA), a Power Amplifier (PA), one or more filters, one or more converters, one or more mixers, one or more duplexers, one or more diplexers etc.

The control module 18 may correspond to one or more control units, one or more control devices, or any means for controlling. In some embodiments the control module 18 may be implemented in software, which is executable on accordingly adapted hardware, such as a processor, a Digital Signal Processor (DSP), a multi-purpose processor, or the like.

In some embodiments, the apparatus 10 may carry out a method for intelligently switching between multiple antennas (plurality of antennas 30) to the existing antenna ports of the receiver device (at the transceiver module 14) to get better signal quality. For example, the transceiver module 14 may comprise 1, 2, 4, or 8 antenna ports and the plurality of antennas may comprise more antenna elements than there are ports at the transceiver module 14, e.g. at least 2, 3, 5, 9, etc.

Embodiments further provide a vehicle comprising the apparatus 10, e.g. to enhance a mobile relay station transceiver in the vehicles. Applying more than two antennas (as the plurality of antennas 30) to the vehicle and connecting them via a switch matrix (as the coupling module 16) to the (e.g. two) inputs of the receiver (as the transceiver module 14) would allow selecting different antennas.

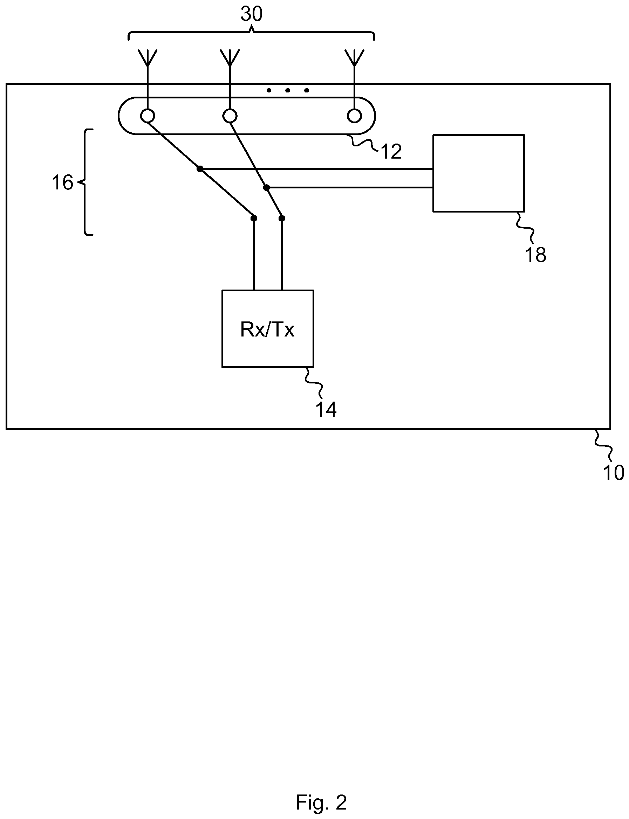

Fig. 2 shows another embodiment of an apparatus 10 for a transceiver. In the embodiment depicted in Fig. 2 the coupling module 16 is implemented as a switch matrix, switching two antenna ports of the transceiver module 14 between the plurality of antennas 30, e.g. 8 antennas (symbolized by three antenna symbols in Fig. 2). The one or more interfaces 12 are implemented as 8 antenna connectors connecting the 8 antennas to the matrix switch 16. The control module 18 is configured to dynamically select or change the antennas in the subset of two antennas while communicating in the mobile communication system. As illustrated in Fig. 2, in some embodiments the coupling module 16 corresponds to an antenna switch or an antenna switch matrix for switching at least two antenna ports of the transceiver module 14 to at least four antennas via at least four interfaces 12.

In some embodiments, the apparatus 10 comprises a receiver module 20, as also indicated by the optional receiver module 20 in Fig. 1. The receiver module 20 is controlled by the control module 18 and may correspond to one or more receiver units, one or more receiver devices, any means for receiving, etc. In embodiments a receiver module 14 may comprise typical receiver components. Such components may comprise one or more receive antennas or receive antenna connectors, a Low Noise Amplifier (LNA), one or more filters, one or more converters, one or more mixers, one or more duplexers, one or more diplexers etc. In the embodiment depicted in Fig. 1, the receiver module 20 is configured to receive and measure signals of at least one antenna from the plurality of antennas 30, which is deselected for the subset. As further shown in Fig. 1 the receiver module 20 may be coupled to the one or more interfaces 12 or to the plurality of antennas 30, such that according signals from the antennas can be received. The information related to the antenna performance may correspond to information related to signal quality measurements on at least some antennas of the plurality of antennas 30. The receiver module 20 may perform measurements on at least some antenna elements, in some embodiments even on all antenna elements of the plurality 30 and may provide information related to measurement results to the control module 18. The control module 18 may then dynamically select the antennas or antenna elements for the subset.

In some embodiments, antennas, which are not selected, could be connected to the passive measurement device, e.g. a second modem implemented as receiver module 20. For example, if there are four antenna elements in the plurality of antennas, the signal strength information collected for all four antennas now allows the control module 18 for instantaneously selecting the antennas with the best signal quality for the active modem in the transceiver module 14. In embodiments, the receiver module 20 may be configured to receive signals from the mobile communication system and the information related to the antenna performance corresponds to a receive level of the signals of the mobile communication system at an antenna or antenna element.

In further embodiments, the receiver module 20 may be configured to receive and decode signals from the mobile communication system and the information related to the antenna performance corresponds to a quality level after decoding of the signals of the mobile communication system at an antenna or antenna element. The receiver module 20 may then correspond to a modem, which is adapted to receive and decode the respective signal of the mobile communication system. By utilizing real modems for the measurement devices or receiver modules 20 in embodiments, these can fully decode the signal quality and not just rely on levels such as passive measurement devices or diversity combiners. The decoding may allow determining other quality measurements, which include the decoding gain such as Bit Error Rates (BER), bit energy over noise density, etc. In such embodiments interference impacts may be considered more accurately or precisely than in embodiments using receive level measurements. Generally in embodiments the receiver module 20 may enable quality measurements or determination of information related to antenna performance based on a Signal-to-Noise Ratio (SNR), a Signal-to-Interference Ratio (SIR), a Signal-to-Interference- and-Noise Ratio (SINR), a Receive Signal Code Power (RSCP), a Receive Signal Strength Indicator (RSSI), etc.

As further illustrated by Fig. 1, some embodiments may further comprise a storage module 22, which is controlled by and coupled to the control module 18. The storage module 22 may be implemented as one or more storage units, one or more storage devices, any means for storing, etc. For example, the storage module 22 may correspond to a memory, a hard drive, flash memory, etc. The storage module 22 is configured to store information related to the subset together with information related to a location of the apparatus 10. In embodiments there are several options on how the information on the subset can be stored. For example, one option is to store identification (such as a number) for the antennas or antenna elements selected for the subset. Another option for the information related to the subset would be to store which antennas or antenna elements have been deselected or not selected for the subset. In some embodiments a bitmap may be stored, e.g. a vector having one bit per antenna or antenna element, wherein a value of a corresponding bit may indicate whether the respective antenna or antenna element has been selected for the subset or not. Obviously, there are multiple options to store or to code such information, for example, if two out of four antennas are selected then there may be six combinations, which may be represented by three bits, if two of these options can be precluded, then two bits may suffice. Embodiments may use any form, coding or data that would allow determining which antennas or antenna elements are in the subset and which ones are not.

The information related to the location may be received from another component or device, such as navigation system, for example, through an accordingly configured communication interface 26, or the information related to the location may be generated internally of the apparatus 10.

In such embodiments, the location of the apparatus 10 may allow to select the subset of antennas based on previous measurements or evaluations, which can then provide the possibility to store information related to the antennas or antenna elements, their performance, respectively, selected for the subset at a location. In this way, less or less frequent measurements may be necessary as for a certain location the same subset may be reused, at least until new measurements for updates or subset verification are carried out.

As further shown in Fig. 1 in some embodiments the apparatus 10 may further comprise a positioning module 24, which is controlled by and coupled to the control module 18. The positioning module 24 is configured to obtain the information related to the location of the apparatus 10. The positioning module 24 may be implemented as one or more positioning units, one or more positioning devices, any means for positioning, etc. For example, the positioning module 24 may comprises a Global Navigation Satellite System (GNSS) receiver, such as a Global Positioning System (GPS), a GLONASS (GLObal NAvigation Satellite System), or any other navigation system receiver. Embodiments additionally using position information (e.g. GPS) may allow collecting the information on signal strength (and other parameters) or information related to the antenna performance of each antenna into a database, which is stored by the storage module 22. Knowledge about this signal strength over the location and the involved hand-over procedures allows deriving even better antenna path switching for the previously measured drive test routes. When switching between antenna ports characteristics of the mobile network can be considered, thus allowing to sequentially performing the port switching, continuous signals on at least one of the antenna ports may be enabled. The control module 18 may then be configured to select the antennas for the subset based on actual information related to the location of the apparatus 10 and information related to the subset stored by the storage module 22. The storage module 22 may then be configured to store a look-up table assigning information related to a location of the apparatus 10 to subsets of antennas for selection.

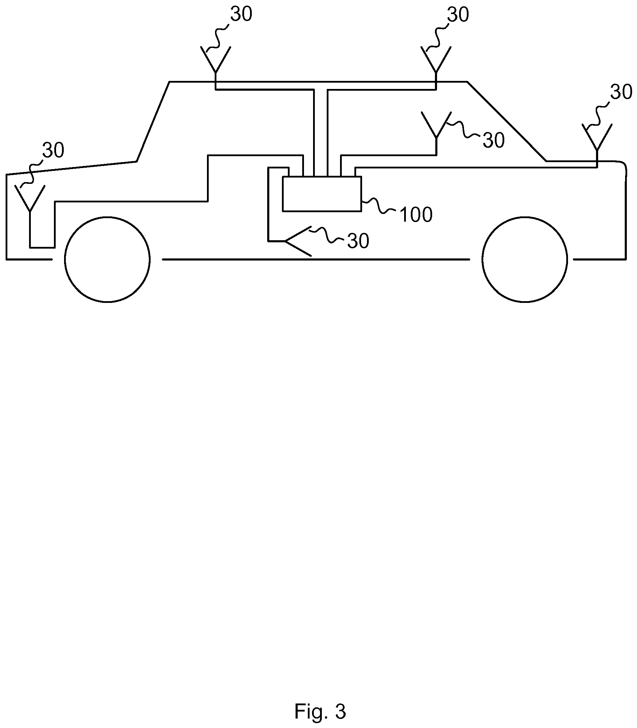

Fig. 3 shows an embodiment of a mobile relay station transceiver 100 comprising an embodiment of the apparatus 10, which is implemented in a vehicle, e.g. a car. The plurality of antennas 30 is implemented as a number of antenna elements at different places around the car's body, having different orientations, polarizations and characteristics. In this embodiment the transceiver 100 is configured to select an advantageous subset of antenna elements from the plurality of antennas, potentially based on measurements obtained with an additional modem or based on location data and a look-up table. Embodiments hence provide a mobile relay station transceiver 100 being implemented in a vehicle. The vehicle comprises the plurality of antennas 30 and the plurality of antennas 30 comprises antennas of different characteristics.

In some embodiments, the apparatus 10 may further comprise a communication interface 26 to communicate with other devices, e.g. a navigation device or another transceiver 110 of the mobile communication system 500. Such a communication interface 26 may correspond to any interface adapted to the respective communication or access technology, which may be wireless or wire line communication. An interface may use a certain access technology, protocol, medium, etc. to establish a connection or communication link to another transceiver, be it based on analog or digital communication. Such an interface 26 may be implemented as an inter-transceiver interface, e.g. to enable communication between two base station transceivers, a base station transceiver and a relay station transceiver, between two relay station transceivers, a mobile transceiver and another mobile transceiver, a mobile transceiver and a base station transceiver, a mobile transceiver and a relay station transceiver, etc. The communication interface 26 is controlled by and coupled the control module 18 as indicated in Fig. 1. The control module 18 may be configured to obtain and/or provide the information related to the antenna performance from and/or to the other transceiver 110 using the communication interface 26.

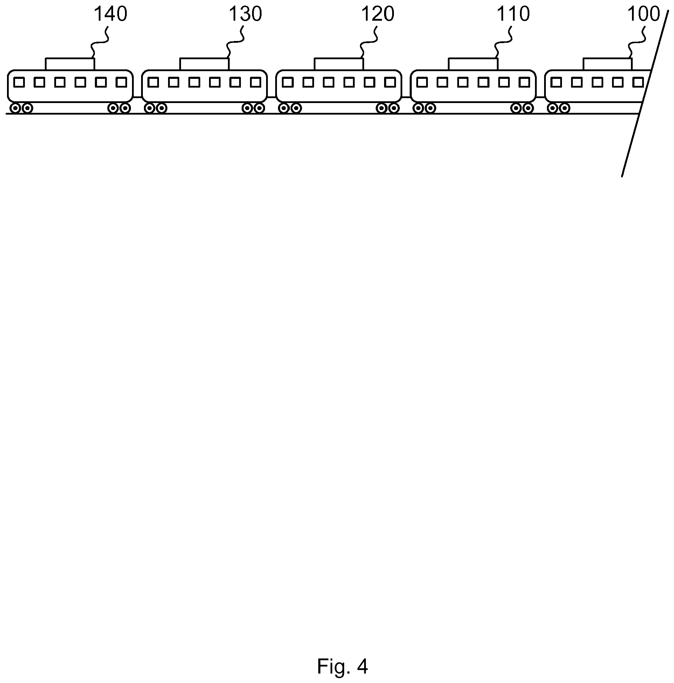

Fig. 4 shows multiple embodiments of mobile relay station transceivers 100, 110, 120, 130, 140, each comprising an apparatus 10 according to the above description, in a train. Moreover, each of the transceivers 100, 110, 120, 130, 140 comprises a communication interface 26 according to the above description such that the transceivers can communicate information to each other. In some embodiments such information may correspond to information related to antennas performance, which can be advantageous if two or more of the transceivers 100, 110, 120, 130, 140 share antennas. One transceiver may then inform another transceiver on which antenna or which subset of antennas is beneficial at which location. It is to be noted that in a scenario as depicted in Fig. 4, where the transceivers 100, 110, 120, 130, 140, their antennas respectively, are mounted at fixed relative positions or geometries, radio condition of one antenna may become predictable. For example, the radio condition of an antenna in the front of a train may repeat for an antenna in the back of the train, depending on the speed of the train and the distance between the antennas. For example, if each of the transceivers 100, 110, 120, 130, 140 operates a plurality of antennas installed at the respective cart or wagon the transceiver is mounted to, then a subset measured and selected for a first cart or wagon may be selected by the subsequent carts or wagons as well, once they pass the same location.

Radio conditions may then reproduce, again depending on the distance between the antennas and the speed of the train. If, for example, the first control module in the first cart determines that an antenna on the left side of the train provides advantages over an antenna mounted on the right hand side, this condition may repeat for the subsequent carts as they pass the same location. Therefore, information related to antenna performance may be communicated between the transceivers 100, 110, 120, 130, 140, be it in terms of information related to when to select which antenna for the subset, information related to at which location to select which antenna for the subset, or information related to measurement results determined at a certain time or location.

If several such systems or transceivers 100, 110, 120, 130, 140 are used on long vehicles, for example (but not limited to) trains, then the measurements of the measurement devices can be communicated from the systems in the direction of travel towards the other systems or transceivers 100, 110, 120, 130, 140 using correspondingly configured communication interfaces. In this way, the measurements allow transceivers to estimate or even exactly predict the Radio Frequency (RF) performance of those antenna systems in time for time scales of the order of several seconds. This information can then be used to control the amount of data being produced by the entities using the modems for transmission. This in turn may avoid congestion and other problems before they arise. Embodiments may hence allow utilizing gain provided by more than two antennas on larger objects (e.g. vehicles) but using readily available components, for example with just two antenna ports.

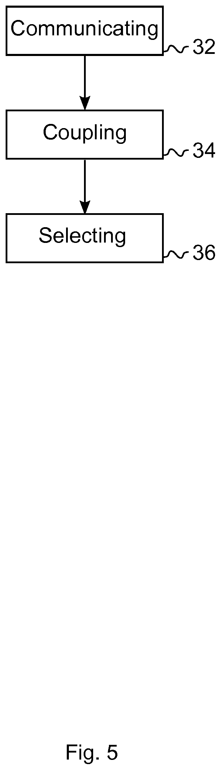

Fig. 5 shows a block diagram of a flow chart of an embodiment of a method for a transceiver 100 of a mobile communication system 500. The method comprises communicating 32 in the mobile communication system 500 using a subset of a plurality of antennas, and coupling 34 the subset of the plurality of antennas to a transceiver module 14 using one or more interfaces 12. The method further comprises selecting 36 antennas for the subset of antennas from the plurality of antennas based on predetermined information related to an antenna performance.

A further embodiment is a computer readable storage medium storing instructions which, when executed by a computer, cause the computer to implement one of the methods described herein. Other embodiments are a computer program or a computer program product having a program code for performing anyone of the above described methods, when the computer program or computer program product is executed on a processor, computer, or programmable hardware.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions where said instructions perform some or all of the steps of methods described herein. The program storage devices may be, e.g., digital memories, magnetic storage media such as magnetic disks and magnetic tapes, hard drives, or optically readable digital data storage media. The embodiments are also intended to cover computers programmed to perform said steps of methods described herein or (field) programmable logic arrays ((F)PLAs) or (field) programmable gate arrays ((F)PGAs), programmed to perform said steps of the above-described methods.

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

Functional blocks denoted as "means for ..." (performing a certain function) shall be understood as functional blocks comprising circuitry that is adapted for performing or to perform a certain function, respectively. Hence, a "means for s.th." may as well be understood as a "means being adapted or suited for s.th.". A means being adapted for performing a certain function does, hence, not imply that such means necessarily is performing said function (at a given time instant).

The functions of the various elements shown in the Figures, including any functional blocks labeled as "means", "means for coupling", "means for transceiving", "means for transmitting", "means for receiving", "means for controlling", "means for storing", "means for positioning", etc., may be provided through the use of dedicated hardware, such as "a coupler", "a transceiver", "a transmitter", "a receiver", "a controller", "a storage", "a positioner", etc. as well as hardware capable of executing software in association with appropriate software. Moreover, any entity described herein as "means", may correspond to or be implemented as "one or more modules", "one or more devices", "one or more units", etc. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non-volatile storage. Other hardware, conventional and/or custom, may also be included. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

Furthermore, the following claims are hereby incorporated into the Detailed Description, where each claim may stand on its own as a separate embodiment. While each claim may stand on its own as a separate embodiment, it is to be noted that - although a dependent claim may refer in the claims to a specific combination with one or more other claims - other embodiments may also include a combination of the dependent claim with the subject matter of each other dependent claim. Such combinations are proposed herein unless it is stated that a specific combination is not intended. Furthermore, it is intended to include also features of a claim to any other independent claim even if this claim is not directly made dependent to the independent claim.

It is further to be noted that methods disclosed in the specification or in the claims may be implemented by a device having means for performing each of the respective steps of these methods.

## Claims

1. An apparatus (10) for a transceiver (100) of a mobile communication system (500), the apparatus (10) comprising
one or more interfaces (12) to a plurality of antennas (30);
a transceiver module (14) to communicate in the mobile communication system (500) using a subset of the plurality of antennas (30);
a coupling module (16) to couple the subset of the plurality of antennas (30) to the transceiver module (14) using the one or more interfaces (12);
a control module (18) to
control the transceiver module (14) and the coupling module (16),
select antennas for the subset of antennas from the plurality of antennas (30) based on predetermined information related to an antenna performance,
the apparatus (10) further comprising a receiver module (20), which is controlled by the control module (18),
wherein the receiver module (20) is configured to
receive and measure signals of at least one antenna from the plurality of antennas (30), which is deselected for the subset, and
decode signals from the mobile communication system (500), wherein the information related to the antenna performance corresponds to a quality level after decoding of the signals of the mobile communication system (500) at an antenna.

2. The apparatus (10) of claim 1, wherein the control module (18) is configured to dynamically select or change the antennas in the subset while communicating in the mobile communication system (500).

3. The apparatus (10) of claim 1, wherein the receiver module (20) is configured to receive signals from the mobile communication system (500) and wherein the information related to the antenna performance corresponds to a receive level of the signals of the mobile communication system at an antenna.

4. The apparatus (10) of one of the preceding claims, further comprising a storage module (22), which is controlled by the control module (18), wherein the storage module (22) is configured to store information related to the subset together with information related to a location of the apparatus (10).

5. The apparatus (10) of claim 4, further comprising a positioning module (24), which is controlled by the control module (18), wherein the positioning module (24) is configured to obtain the information related to the location of the apparatus (10).

6. The apparatus (10) of one of the claims 5 or 6, wherein the control module (18) is configured to select the antennas for the subset based on actual information related to the location of the apparatus (10) and information related to the subset stored by the storage module (22).

7. The apparatus (10) of claim 6, wherein the storage module (22) is configured to store a look-up table assigning information related to a location of the apparatus (10) to subsets of antennas for selection.

8. The apparatus (10) of one of the preceding claims, further comprising a communication interface (26) to communicate with another transceiver (110) of the mobile communication system (500), the communication interface (26) being controlled by the control module (18), the control module (18) being configured to obtain and/or provide the information related to the antenna performance from the other transceiver (110) using the communication interface (26).

9. The apparatus (10) of one of the preceding claims, wherein the coupling module (16) corresponds to an antenna switch or an antenna switch matrix for switching at least two antenna ports of the transceiver module (14) to at least four antennas via at least four interfaces (12).

10. A mobile relay station transceiver (100) comprising an apparatus (10) of one of the preceding claims.

11. The mobile relay station transceiver (100) of claim 10 being implemented in a vehicle, the vehicle comprising the plurality of antennas (30), wherein the plurality of antennas (30) comprises antennas of different orientations.

12. A method for a transceiver (100) of a mobile communication system (500), the method comprising
communicating (32) in the mobile communication system (500) using a subset of a plurality of antennas (30);
coupling (34) the subset of the plurality of antennas (30) to a transceiver module (14); and
selecting (36) antennas for the subset of antennas from the plurality of antennas (30) based on predetermined information related to an antenna performance,
receiving and measuring signals of at least one antenna from the plurality of antennas (30), which is deselected for the subset, and
decoding signals from the mobile communication system (500), wherein the information related to the antenna performance corresponds to a quality level after decoding of the signals of the mobile communication system (500) at an antenna.

13. A computer program having a program code for performing the method of claim 12, when the computer program is executed on a computer, a processor, or a programmable hardware component.

## Patentansprüche

1. Eine Vorrichtung (10) für einen Sendeempfänger (100) eines Mobilkommunikationssystems (500), die Vorrichtung umfassend
eine oder mehrere Schnittstellen (12) zu einer Mehrzahl von Antennen (30);
ein Sendeempfängermodul (14) zum Kommunizieren in dem Mobilkommunikationssystem (500) unter Verwendung einer Teilmenge der Mehrzahl von Antennen (30);
ein Kopplungsmodul (16) zum Koppeln der Teilmenge der Mehrzahl von Antennen (30) mit dem Sendeempfängermodul (14) unter Verwendung der einen oder mehreren Schnittstellen (12);
ein Steuerungsmodul (18) zum
Steuern des Sendeempfängermoduls (14) und des Kopplungsmoduls (16),
Auswählen von Antennen für die Teilmenge von Antennen aus der Mehrzahl von Antennen (30) basierend auf einer vorbestimmten Information bezogen auf ein Antennenverhalten,
die Vorrichtung (10) ferner umfassend ein Empfängermodul (20), das durch das Steuerungsmodul (18) gesteuert wird,
wobei das Empfängermodul (20) ausgebildet ist zum
Empfangen und Messen von Signalen von zumindest einer Antenne aus der Mehrzahl von Antennen (30), die für die Teilmenge abgewählt ist, und
Decodieren von Signalen von dem Mobilkommunikationssystem (500), wobei die Information bezogen auf das Antennenverhalten einem Qualitätslevel nach dem Decodieren der Signale des Mobilkommunikationssystems (500) an einer Antenne entspricht.

2. Die Vorrichtung (10) gemäß Anspruch 1, wobei das Steuerungsmodul (18) ausgebildet ist, um die Antennen in der Teilmenge während des Kommunizierens in dem Mobilkommunikationssystem (500) dynamisch auszuwählen oder zu ändern.

3. Die Vorrichtung (10) gemäß Anspruch 1, wobei das Empfängermodul (20) ausgebildet ist, um Signale von dem Mobilkommunikationssystem (500) zu empfangen und wobei die Information bezogen auf das Antennenverhalten einem Empfangspegel der Signale des Mobilkommunikationssystems an einer Antenne entspricht.

4. Die Vorrichtung (10) gemäß einem der vorangehenden Ansprüche, ferner umfassend ein Speicherungsmodul (22), das durch das Steuerungsmodul (18) gesteuert wird, wobei das Speicherungsmodul (22) ausgebildet ist, um Informationen, die sich auf die Teilmenge beziehen, zusammen mit Informationen, die sich auf eine Position der Vorrichtung (10) beziehen, zu speichern.

5. Die Vorrichtung (10) gemäß Anspruch 4, ferner umfassend ein Positionierungsmodul (24), das durch das Steuerungsmodul (18) gesteuert wird, wobei das Positionierungsmodul (24) ausgebildet ist, um die Informationen zu erhalten, die sich auf die Position der Vorrichtung (10) beziehen.

6. Die Vorrichtung (10) gemäß einem der Ansprüche 5 oder 6, wobei das Steuerungsmodul (18) ausgebildet ist, um die Antennen für die Teilmenge basierend auf tatsächlichen Informationen, die sich auf die Position der Vorrichtung (10) beziehen, und auf Informationen, die sich auf die Teilmenge beziehen, die durch das Speicherungsmodul (22) beziehen, auszuwählen.

7. Die Vorrichtung (10) gemäß Anspruch 6, wobei das Speicherungsmodul (22) ausgebildet ist, um eine Nachschlagtabelle zu speichern, die Informationen bezogen auf eine Position der Vorrichtung (10) zu Teilmengen von Antennen zur Auswahl zuweist.

8. Die Vorrichtung (10) gemäß einem der vorangehenden Ansprüche, ferner umfassend eine Kommunikationsschnittstelle (26) zum Kommunizieren mit einem anderen Sendeempfänger (110) des Mobilkommunikationssystems (500), wobei die Kommunikationsschnittstelle (26) durch das Steuerungsmodul (18) gesteuert wird, wobei das Steuerungsmodul (18) ausgebildet ist, um die Informationen, die sich auf das Antennenverhalten beziehen, von dem anderen Sendeempfänger (110) unter Verwendung der Kommunikationsschnittstelle (26) zu erhalten und/oder bereitzustellen.

9. Die Vorrichtung (10) gemäß einem der vorangehenden Ansprüche, wobei das Kopplungsmodul einem Antennenschalter oder einer Antennenschaltermatrix zum Schalten von zumindest zwei Antennenports des Sendeempfängermoduls (14) zu zumindest vier Antennen über zumindest vier Schnittstellen (12) entspricht.

10. Ein mobiler Relaisstations-Sendeempfänger (100) umfassend eine Vorrichtung (10) gemäß einem der vorangehenden Ansprüche.

11. Der mobile Relaisstations-Sendeempfänger (100) gemäß Anspruch 10, der in einem Fahrzeug implementiert ist, wobei das Fahrzeug die Mehrzahl von Antennen (30) umfasst, wobei die Mehrzahl von Antennen (30) Antennen unterschiedlicher Ausrichtungen umfasst.

12. Ein Verfahren für einen Sendeempfänger (100) eines Mobilkommunikationssystems (500), das Verfahren umfassend
Kommunizieren (32) in dem Mobilkommunikationssystems (500) unter Verwendung einer Teilmenge einer Mehrzahl von Antennen (30);
Koppeln (34) der Teilmenge der Mehrzahl von Antennen (30) mit einem Sendeempfängermodul (14); und
Auswählen (36) von Antennen für die Teilmenge von Antennen aus der Mehrzahl von Antennen (30) basierend auf vorbestimmten Informationen bezogen auf ein Antennenverhalten,
Empfangen und Messen von Signalen von zumindest einer Antenne aus der Mehrzahl von Antennen (30), die für die Teilmenge abgewählt wird, und
Decodieren von Signalen von dem Mobilkommunikationssystem (500), wobei die Information bezogen auf das Antennenverhalten einem Qualitätslevel nach dem Decodieren der Signale des Mobilkommunikationssystems (500) an einer Antenne entspricht.

13. Ein Computerprogramm mit einem Programmcode zum Ausführen des Verfahrens gemäß Anspruch 12, wenn das Computerprogramm auf einem Computer, einem Prozessor oder einer programmierbaren Hardwarekomponente ausgeführt wird.

## Revendications

1. Appareil (10) pour un émetteur-récepteur (100) d'un système de communication mobile (500), l'appareil (10) comprenant :
une ou plusieurs interfaces (12) vers une pluralité d'antennes (30) ;
un module émetteur-récepteur (14) pour communiquer dans le système de communication mobile (500) en utilisant un sous-ensemble de la pluralité d'antennes (30) ;
un module de couplage (16) pour coupler le sous-ensemble de la pluralité d'antennes (30) au module émetteur-récepteur (14) en utilisant la ou les interfaces (12) ;
un module de commande (18) pour :
commander le module émetteur-récepteur (14) et le module de couplage (16),
sélectionner des antennes pour le sous-ensemble d'antennes parmi la pluralité d'antennes (30) sur la base d'informations prédéterminées relatives aux performances d'antenne,
l'appareil (10) comprenant en outre un module récepteur (20), qui est commandé par le module de commande (18), où le module récepteur (20) est configuré pour :
recevoir et mesurer des signaux d'au moins une antenne parmi la pluralité d'antennes (30) qui est désélectionnée pour le sous-ensemble, et
décoder des signaux provenant du système de communication mobile (500), où les informations relatives aux performances d'antenne correspondent à un niveau de qualité après décodage des signaux du système de communication mobile (500) au niveau d'une antenne.

2. Appareil (10) selon la revendication 1, dans lequel le module de commande (18) est configuré pour sélectionner ou changer de manière dynamique les antennes dans le sous-ensemble tout en communiquant dans le système de communication mobile (500).

3. Appareil (10) selon la revendication 1, dans lequel le module récepteur (20) est configuré pour recevoir des signaux provenant du système de communication mobile (500), et où les informations relatives aux performances d'antenne correspondent à un niveau de réception des signaux du système de communication mobile au niveau d'une antenne.

4. Appareil (10) selon l'une des revendications précédentes, comprenant en outre un module de stockage (22), qui est commandé par le module de commande (18), où le module de stockage (22) est configuré pour stocker des informations relatives au sous-ensemble avec des informations relatives à un emplacement de l'appareil (10).

5. Appareil (10) selon la revendication 4, comprenant en outre un module de positionnement (24), qui est commandé par le module de commande (18), où le module de positionnement (24) est configuré pour obtenir les informations relatives à l'emplacement de l'appareil (10) .

6. Appareil (10) selon l'une des revendications 5 ou 6, dans lequel le module de commande (18) est configuré pour sélectionner les antennes pour le sous-ensemble sur la base d'informations réelles relatives à l'emplacement de l'appareil (10) et d'informations relatives au sous-ensemble stocké par le module de stockage (22).

7. Appareil (10) selon la revendication 6, dans lequel le module de stockage (22) est configuré pour stocker une table de consultation attribuant des informations relatives à un emplacement de l'appareil (10) à des sous-ensembles d'antennes pour sélection.

8. Appareil (10) selon l'une des revendications précédentes, comprenant en outre une interface de communication (26) pour communiquer avec un autre émetteur-récepteur (110) du système de communication mobile (500), l'interface de communication (26) étant commandée par le module de commande (18), le module de commande (18) étant configuré pour obtenir et/ou fournir les informations relatives aux performances d'antenne de l'autre émetteur-récepteur (110) en utilisant l'interface de communication (26).

9. Appareil (10) selon l'une des revendications précédentes, dans lequel le module de couplage (16) correspond à un commutateur d'antenne ou à une matrice de commutation d'antenne pour commuter au moins deux ports d'antenne du module émetteur-récepteur (14) vers au moins quatre antennes par l'intermédiaire d'au moins quatre interfaces (12).

10. Émetteur-récepteur de station relais mobile (100) comprenant un appareil (10) de l'une des revendications précédentes.

11. Émetteur-récepteur de station relais mobile (100) selon la revendication 10 étant mis en oeuvre dans un véhicule, le véhicule comprenant la pluralité d'antennes (30), où la pluralité d'antennes (30) comprend des antennes d'orientations différentes.

12. Procédé pour un émetteur-récepteur (100) d'un système de communication mobile (500), le procédé comprenant les étapes suivantes :
communiquer (32) dans le système de communication mobile (500) en utilisant un sous-ensemble d'une pluralité d'antennes (30) ;
coupler (34) le sous-ensemble de la pluralité d'antennes (30) à un module émetteur-récepteur (14) ; et
sélectionner (36) des antennes pour le sous-ensemble d'antennes parmi la pluralité d'antennes (30) sur la base d'informations prédéterminées relatives aux performances d'antenne,
recevoir et mesurer des signaux d'au moins une antenne de la pluralité d'antennes (30), qui est désélectionnée pour le sous-ensemble, et
décoder des signaux du système de communication mobile (500), où les informations relatives aux performances d'antenne correspondent à un niveau de qualité après décodage des signaux du système de communication mobile (500) au niveau d'une antenne.

13. Programme informatique ayant un code de programme pour exécuter le procédé de la revendication 12, lorsque le programme informatique est exécuté sur un ordinateur, un processeur ou un composant matériel programmable.
